# EUROPÄISCHE PATENTANMELDUNG

(11) **EP 1 014 069 A1**
(43) Veröffentlichungstag der Anmeldung: **28.06.2000**
(21) Anmeldenummer: 99124267.8
(22) Anmeldetag: 04.12.1999
(51) Int. Cl.: G01M 3/32, G01M 3/28, B65D 90/50

(54) **Leckanzeigeeinrichtung für Behälter zur Lagerung von Flüssigkeiten**

(30) Priorität: 16.12.1998 DE 29822370 U
(71) Anmelder: Sicherungsgerätebau GmbH, 57076 Siegen (DE)
(72) Erfinder: Berg, Jost, 57234 Wilnsdorf (DE)
(74) Vertreter: Pürckhauer, Rolf, Dipl.-Ing.

(57) **Zusammenfassung**

Die zur Überwachung von unterirdisch im Freien eingebauten Kraftstoff-Lagerbehältern (1) einer Tankstelle zum Einsatz kommende Leckanzeigeeinrichtung (2) ist mit einem nach dem Überdruckprinzip arbeitenden Leckanzeiger (3) ausgerüstet, der eine Meßeinheit (4) und eine Anzeigeeinheit (5) umfaßt. Die Meßeinheit (4) ist in ein Schutzgehäuse (6) eingebaut, das im Freien an eine Außenwand (8) des Tankstellengebäudes (7) angebracht ist. Die Anzeigeeinheit (5) ist in ein Schutzgehäuse (9) eingebaut, das im Tankstellengebäude (7) untergebracht ist. Die Überwachungsräume (10) der Lagerbehälter (1) sind über Druckleitungen (13) an eine Druckluftpumpe der Meßeinheit (4) und über Meßleitungen (17) an einen Druckschalter der Meßeinheit (4) zur Steuerung eines Leuchtmelders und eines Summers der Anzeigeeinheit (5) des Leckanzeigers (3) angeschlossen.

Die Leckanzeigeeinrichtung benötigt lediglich einen Leckanzeiger (3) zur Überwachung mehrerer Kraftstoff-Lagerbehälter (1).

## Beschreibung

Die Erfindung betrifft eine Leckanzeigeeinrichtung für doppelwandige Lagerbehälter zur Lagerung von wassergefährdenden, brennbaren und nicht brennbaren Flüssigkeiten und für als doppelwandige Rohre ausgebildete Fülleitungen für die Lagerbehälter, mit einem durch den Innenmantel und den Außenmantel des Lagerbehälters oder des Rohres gebildeten Überwachungsraum zum Anschluß an eine Druckluft- oder Druckgasquelle sowie an einen Druckgeber eines nach dem Überdruckprinzip arbeitenden Leckanzeigers zur Steuerung einer akustischen und/oder optischen Alarmeinrichtung.

Die vom Deutschen Ausschuß für brennbare Flüssigkeiten (DAbF) aufgestellten Bau- und Prüfgrundsätze für nach dem Überdruckprinzip arbeitende Leckanzeigegeräte für Behälter und Rohrleitungen, TRbF 501/502, schreiben vor, daß der Überdruck im Überwachungsraum bis zum Eintritt eines Lecks im Behälter bzw. in der Rohrleitung höher sein muß als der mögliche Betriebsdruck des Behälters bzw. der Rohrleitung. Der Druckerzeuger zum Befüllen des Überwachungsraumes mit Druckluft oder Druckgas darf bei einem Druck, der dem Druck im Alarmschaltpunkt entspricht, nur maximal einen Volumenstrom von 70-100 Litern Luft bzw. Gas pro Stunde fördern, damit bei Auftreten eines Lecks eine sichere Alarmauslösung möglich ist.

Die aus der DE 44 17 624 C2 bekannte Leckanzeigeeinrichtung der gattungsgemäßen Art benötigt für jeden zu überwachenden Lagerbehälter einen Leckanzeiger. Die Leckanzeiger für mehrere Lagerbehälter und die Fülleitungen der Behälter sind parallel geschaltet, und die Versorgung der Überwachungsräume der Lagerbehälter und der Fülleitungen der Behälter erfolgt durch eine Druckluft- oder Druckgasquelle, wobei die Leckanzeiger mit einem den Druck im zugehörigen Überwachungsraum erfassenden Drucksensor zur Steuerung eines Proportionalventils mit vollem Durchgang bei der Erstbefüllung oder Wiederbefüllung eines Überwachungsraumes mit Druckluft oder Druckgas nach der Durchführung von Reparatur- und Wartungsarbeiten und zur konstanten Einstellung des festgesetzten Luft- oder Gasvolumenstroms beim Nachfüllvorgang unabhängig vom Druck im Überwachungsraum verbunden sind. Die Leckanzeiger, die Leuchtmelder zur Anzeige des Betriebszustandes sowie eines Alarmzustandes und der akustische Alarmgeber sind in einem Schutzgehäuse untergebracht.

Diese bekannte Leckanzeigeeinrichtung ist wegen der benötigten Anzahl von Leckanzeigern technisch verhältnismäßig aufwendig, und die Montage der Leckanzeigeeinrichtung ist bei einer Überwachung von außerhalb eines Gebäudes im Erdreich eingelassenen oder im Freien aufgestellten Lagerbehältern arbeits- und dementsprechend kostenaufwendig, da die an die verschiedenen Überwachungsräume anzuschließenden Druck- und Meßleitungen bis zu der Leckanzeigeeinrichtung geführt werden müssen, die in einem Gebäude eingebaut wird.

Der Erfindung liegt die Aufgabe zugrunde, eine Leckanzeigeeinrichtung zur Überwachung mehrerer Lagerbehälter für Flüssigkeiten zu entwickeln, die sich durch eine einfache Technik und niedrige Montagekosten auszeichnet.

Diese Aufgabe ist erfindungsgemäß gelöst durch eine Leckanzeigeeinrichtung mit den Merkmalen des Patentanspruchs 1.

Die Unteransprüche beinhalten vorteilhafte Weiterbildungen der Erfindung.

Die erfindungsgemäße Leckanzeigeeinrichtung zeichnet sich durch folgende Vorteile aus:

Die Leckanzeigeeinrichtung benötigt lediglich einen Leckanzeiger zur Überwachung mehrerer Flüssigkeitslagerbehälter. Aufgrund des Einbaus der Meßeinheit und der Anzeigeeinheit in gesonderten Schutzgehäusen kann bei einer Überwachung von mehreren Lagerbehältern, z.B. von Benzintanks an einer Tankstelle, die außerhalb des Tankstellengebäudes unterirdisch eingebaut sind, die Meßeinheit im Freien, vorzugsweise außen am Gebäude, angebracht und die Anzeigeeinheit im Gebäude eingebaut werden, so daß die Druck- und Meßleitungen von den Überwachungsräumen der verschiedenen Lagerbehälter und ggf. der Fülleitungen der Behälter nur bis zur Meßeinheit verlegt werden müssen, deren Druckschalter zum Auslösen eines Alarms an die elektrische Steuerung der Anzeigeeinheit angeschlossen wird. Aufgrund der gegenüber den bekannten, nach dem Überdruckprinzip arbeitenden Leckanzeigeeinrichtungen vereinfachten Konstruktion zeichnet sich die neue Leckanzeigeeinrichtung durch einen günstigen Herstellungspreis und niedrige Montagekosten aus. Schließlich ermöglicht die gezielte Temperierung der frostempfindlichen Überdrucksicherung der Leckanzeigeeinrichtung mittels eines elektrischen Heizelementes niedrige Betriebskosten aufgrund geringen Stromverbrauchs.

Die Erfindung ist nachstehend anhand schematischer Zeichnungsfiguren einer Leckanzeigeeinrichtung beschrieben, die folgendes darstellen:

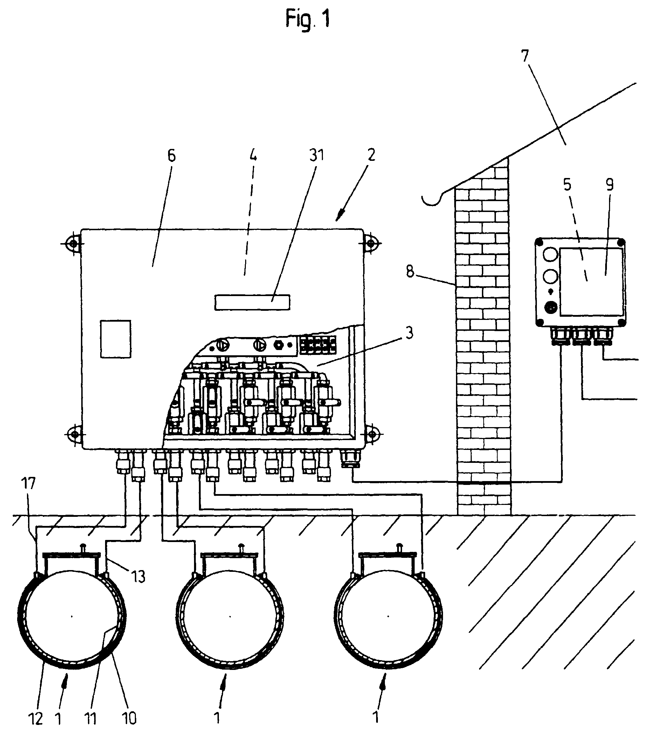

- Fig. 1: eine Leckanzeigeeinrichtung für drei außerhalb eines Gebäudes unterirdisch eingebaute Flüssigkeitslagerbehälter,

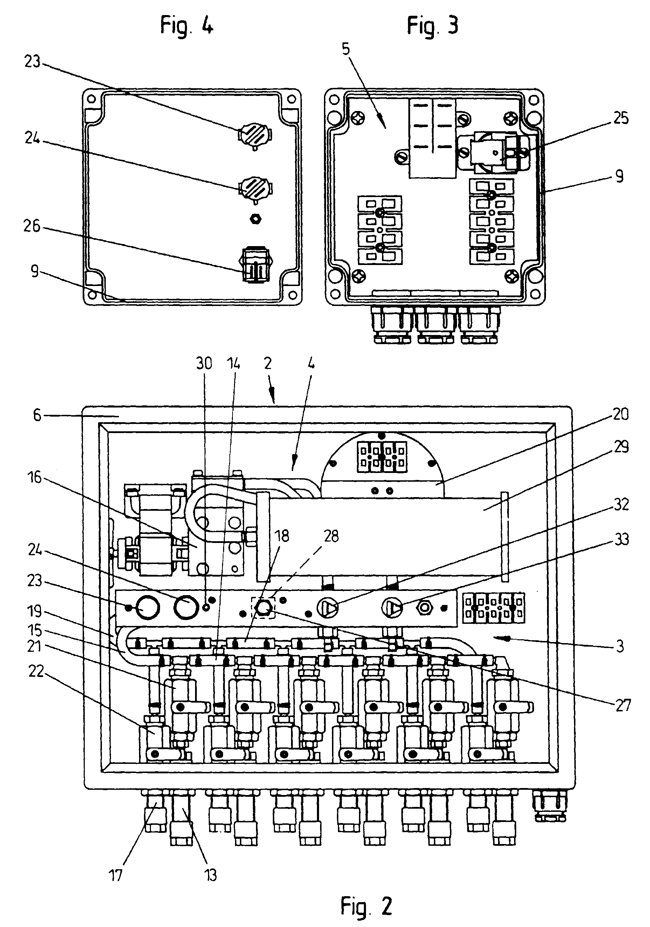

- Fig. 2: die in einem Schutzgehäuse eingebaute Meßeinheit der Leckanzeigeeinrichtung,
- Fig. 3: die in einem Schutzgehäuse untergebrachte Anzeigeeinheit der Leckanzeigeeinrichtung und
- Fig. 4: eine Vorderansicht des Schutzgehäuses der Anzeigeeinheit.

Die z.B. zur Überwachung von drei unterirdisch im Freien eingebauten Kraftstoff-Lagerbehältern 1 einer Tankstelle zum Einsatz kommende Leckanzeigeeinrichtung 2 ist mit einem Leckanzeiger 3 ausgerüstet, der eine Meßeinheit 4 und eine Anzeigeeinheit 5 umfaßt.

Die Meßeinheit 4 ist in ein Schutzgehäuse 6 eingebaut, das im Freien z.B. an einer Außenwand 8 des Tankstellengebäudes 7 angebracht ist. Die Anzeigeeinheit 5 ist in ein Schutzgehäuse 9 eingebaut, das im Tankstellengebäude 7 untergebracht ist.

Die Lagerbehälter 1 weisen einen Überwachungsraum 10 auf, der durch den Innenmantel 11 und den Außenmantel 12 der Behälter gebildet wird.

Die Überwachungsräume 10 der einzelnen Lagerbehälter 1 sind über Druckleitungen 13 parallel an ein Verteilerrohr 14 angeschlossen, das über ein Verbindungsrohr 15 an den Druckstutzen einer Druckluftpumpe 16 der Meßeinheit 4 angeschlossen ist. Ferner sind die Überwachungsräume 10 der Lagerbehälter 1 über Meßleitungen 17 parallel an ein weiteres Verteilerrohr 18 angeschlossen, das über ein Verbindungsrohr 19 an einen Druckschalter 20 der Meßeinheit 4 angeschlossen ist. Die beiden Verteilerrohre 14, 18 für die Druckleitungen 13 und die Meßleitungen 17 sind in die Meßeinheit 4 des Leckanzeigers 3 integriert.

Die Meßeinheit 4 des Leckanzeigers 3 ist mit Absperrhähnen 21, 22 für die Druck- und die Meßleitung 13, 17 der einzelnen Lagerbehälter 1 ausgestattet.

Die Anzeigeeinheit 5 des Leckanzeigers 3 ist mit einem Leuchtmelder 23 zur Anzeige des Betriebszustandes, einem von dem Druckschalter 20 der Meßeinheit 4 gesteuerten Leuchtmelder 24 für die optische Alarmanzeige, einem von dem Druckschalter 20 gesteuerten Summer 25 als akustischer Alarmanzeiger und einem Schalter 26 zum Ausschalten des Summers 25 ausgerüstet.

An das Verteilerrohr 18 für die Meßleitungen 17 der Meßeinheit 4 ist ein weiterer Druckschalter 30 zur Steuerung der Druckluftpumpe 16 angeschlossen.

In das Verbindungsrohr 15 zwischen dem Druckstutzen der Druckluftpumpe 16 der Meßeinheit 4 des Leckanzeigers 3 und dem Verteilerrohr 14 für die Druckleitungen 13 zu den Überwachungsräumen 10 der einzelnen Lagerbehälter 1 ist eine Überdrucksicherung 27 eingebaut, die durch ein von einem Thermoschalter gesteuertes Heizelement 28 temperiert wird.

Die Meßeinheit 4 ist entsprechend der Anzeigeeinheit 5 mit einem Leuchtmelder 23 zur Anzeige des Betriebszustandes und einem Leuchtmelder 24 zur optischen Alarmanzeige ausgestattet.

An den Saugstutzen der Druckluftpumpe 16 der Meßeinheit 4 des Leckanzeigers 3 ist ein Trockenfilter 29 angeschlossen, der durch ein streifenförmiges Sichtfenster 31 im Schutzgehäuse 6 der Meßeinheit 4 kontrolliert werden kann. Das Trocknen der von der Druckluftpumpe 16 angesaugten Außenluft ist erforderlich, um das Auftreten von Feuchtigkeit in den Überwachungsräumen 10 der Lagerbehälter 1 zu unterbinden.

In das Verbindungsrohr 15 zwischen dem Verteilerrohr 14 für die Druckleitungen 13 und der Druckluftpumpe 16 sowie das Verbindungsrohr 19 zwischen dem Verteilerrohr 18 für die Meßleitungen 17 und dem Druckschalter 20 zum Auslösen der optischen und der akustischen Alarmgabe ist je ein Dreiwegeventil 32, 33 eingebaut. Bei der Inbetriebnahme der Leckanzeigeeinrichtung 2 wird an das Dreiwegeventil 32 eine Montagepumpe und an das Dreiwegeventil 33 ein Prüfmeßgerät angeschlossen.

Bei Normalbetrieb der Leckanzeigeeinrichtung 2 sind die Absperrhähne 21, 22 in den Druckleitungen 13 und den Meßleitungen 17 der Überwachungsräume 10 der Lagerbehälter 1 geöffnet, so daß durch die Druckluftpumpe 16 in den Überwachungsräumen 10 ein Überwachungsdruck aufgebaut wird, der über dem Alarmdruck liegt, der wiederum über dem Betriebsdruck der Kraftstofflagerbehälter 1 liegt. Der Alarmdruck ergibt sich aus den TRbF. Ein bei Normalbetrieb durch natürliche Undichtigkeiten des Leckanzeigers 3 der Leckanzeigeeinrichtung 2 bewirkter Druckabfall in den Überwachungsräumen 10 der Lagerbehälter 1 wird innerhalb eines festgesetzten Regelbereiches durch die Zufuhr von Druckluft mittels der Druckluftpumpe 16 ausgeglichen, ohne daß die Alarmleuchtmelder 24 der Meßeinheit 4 und der Anzeigeeinheit 5 und der Summer 25 der Anzeigeeinheit 5 ansprechen, wobei die Druckluftpumpe 16 durch den an das Verteilerrohr 18 für die Meßleitungen 17 der Überwachungsräume 10 der Lagerbehälter 1 angeschlossenen Druckschalter 30 gesteuert wird.

Bei einem Abfall des Überwachungsdruckes in einem der Überwachungsräume 10 der Lagerbehälter 1 und/oder innerhalb der Leckanzeigeeinrichtung 2 unter den unteren Regelwert auf den Alarmschaltpunkt durch den Austritt von Druckluft infolge eines Lecks werden durch den Druckschalter 20 der Meßeinheit 4 die Alarm-Leuchtmelder 24 und der Summer 25 der Meßeinheit 4 und der Anzeigeeinheit 5 eingeschaltet.

Um bei einem durch einen Abfall des Überwachungsdruckes ausgelösten Alarm das Leck zu orten, werden zunächst alle Absperrhähne 21, 22 in den Druckleitungen 13 und Meßleitungen 17 der Überwachungsräume 10 der Lagerbehälter 1 geschlossen. Auf diese Weise kann festgestellt werden, ob der Leckanzeiger 3 selbst eine undichte Stelle aufweist. Ist dies nicht der Fall, werden die Druckleitung 13 und die Meßleitung 17 der Lagerbehälter 1 bei eingeschalteter Druckluftpumpe 16 nacheinander geöffnet, um festzustellen, welcher Lagerbehälter 1 ein Leck besitzt.

Die vorbeschriebene Leckanzeigeeinrichtung 2 kann ferner zur Überwachung der Fülleitungen der Lagerbehälter 1 eingesetzt werden, wobei die Fülleitungen zur Ausbildung eines Überwachungsraumes doppelwandig ausgebildet sind.

## Patentansprüche

1. Leckanzeigeeinrichtung für doppelwandige Lagerbehälter zur Lagerung von wassergefährdenden, brennbaren und nicht brennbaren Flüssigkeiten und für als doppelwandige Rohre ausgebildete Fülleitungen für die Lagerbehälter, mit einem durch den Innenmantel und den Außenmantel des Lagerbehälters oder des Rohres gebildeten Überwachungsraum zum Anschluß an eine Druckluft- oder Druckgasquelle sowie an einen Druckgeber eines nach dem Überdruckprinzip arbeitenden Leckanzeigers zur Steuerung einer akustischen und/oder optischen Alarmeinrichtung, gekennzeichnet durch einen Leckanzeiger (3) mit einer Meßeinheit (4), die eine Druckluftpumpe (16) und einen Druckschalter (20) umfaßt, sowie einer Anzeigeeinheit (5), die mit Leuchtmeldern (23, 24) zur Anzeige des Betriebszustandes und eines Alarms sowie mit einem akustischen Alarmgeber (Summer 25) ausgestattet ist, wobei die Überwachungsräume (10) der einzelnen Lagerbehälter (1) über Druckleitungen (13) parallel an ein mit der Druckluftpumpe (16) verbundenes Verteilerrohr (14) und über Meßleitungen (17) parallel an ein zum Druckschalter (20) zur Steuerung der Alarmgeber führendes Verteilerrohr (18) angeschlossen sind, an das Verteilerrohr (18) für die Meßleitungen (17) ein weiterer Druckschalter (30) zur Steuerung der Druckluftpumpe (16) angeschlossen ist, die Verteilerrohre (14, 18) für die Druckleitungen (13) und die Meßleitungen (17) in die Meßeinheit (4) des Leckanzeigers (3) integriert sind und die Meßeinheit (4) mit Absperrhähnen (21, 22) für die Druck- und die Meßleitung (13, 17) der Überwachunysräume (10) der einzelnen Lagerbehälter (1) ausgestattet ist.

2. Leckanzeigeeinrichtung nach Anspruch 1, gekennzeichnet durch eine Überdrucksicherung (27), die in ein Verbindungsrohr (15) zwischen dem Druckstutzen der Druckluftpumpe (16) und dem Verteilerohr (14) für die Druckleitungen (13) zu den Überwachungsräumen (10) der einzelnen Lagerbehälter (1) eingebaut ist.

3. Leckanzeigeeinrichtung nach Anspruch 2, gekennzeichnet durch ein Heizelement (28) zum Temperieren der Überdrucksicherung (27).

4. Leckanzeigeeinrichtung nach einem der Ansprüche 1 bis 3, gekennzeichnet durch einen an den Saugstutzen der Druckluftpumpe (16) angeschlossenen Trockenfilter (29).

5. Leckanzeigeeinrichtung nach einem der Ansprüche 1 bis 4, dadurch gekennzeichnet, daß Meßeinheit (4) und Anzeigeeinheit (5) jeweils in einem gesonderten Schutzgehäuse (6, 9) untergebracht sind.

6. Leckanzeigeeinrichtung nach einem der Ansprüche 1 bis 5, dadurch gekennzeichnet, daß das Schutzgehäuse (6) der Meßeinheit (4) ein streifenförmiges Sichtfenster (31) zur Kontrolle des Trockenfilters (29) der Druckluftpumpe (16) aufweist.

7. Leckanzeigeeinrichtung nach einem der Ansprüche 1 bis 6 zur Überwachung von Außenlagerbehältern wie Kraftstofftanks an Tankstellen für Kraftfahrzeuge, dadurch gekennzeichnet, daß die Meßeinheit (4) im Freien z.B. an einer Außenwand (8) des Tankstellengebäudes (7) angebracht ist und die Anzeigeeinheit (5) im Tankstellengebäude (7) untergebracht ist.
